Europäisches Patentamt

European Patent Office

Office européen des brevets

(11) Veröffentlichungsnummer: **0 274 119 B1**

(12) **EUROPÄISCHE PATENTSCHRIFT**

(45) Veröffentlichungstag der Patentschrift: **12.08.92**

(21) Anmeldenummer: **87119161.5**

(22) Anmeldetag: **23.12.87**

(51) Int. Cl.⁵: $D03C\ 1/00$

(30) Priorität: **05.01.87 CH 9/87**

(43) Veröffentlichungstag der Anmeldung:
**13.07.88 Patentblatt 88/28**

(45) Bekanntmachung des Hinweises auf die
Patenterteilung:
**12.08.92 Patentblatt 92/33**

(84) Benannte Vertragsstaaten:
**BE DE FR IT**

(56) Entgegenhaltungen:
**EP-A- 0 234 321**
**US-A- 4 367 770**

(73) Patentinhaber: **Kleiner, Ernst**
**Schlieregg**
**CH-8816 Hirzel(CH)**

(72) Erfinder: **Kleiner, Ernst**
**Schlieregg**
**CH-8816 Hirzel(CH)**

(74) Vertreter: **Scheidegger, Werner & Co.**
**Siewerdtstrasse 95**
**CH-8050 Zürich(CH)**

(54) **Steueranordnung einer Keilkupplungsvorrichtung.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Steueranordnung einer Keilkupplungsvorrichtung gemäss dem Oberbegriff des Anspruches 1.

Moderne Schaftmaschinensteuerungen basieren heute auf elektromagnetischen Steuersystemen die mit programmierbarer Elektronik kombiniert ist. Solche Steuerungen sind zum Beispiel aus EP 0 079843, EP 0 068139, oder EP 80105440.4, bekannt. Diese Systeme enthalten Kombinationen von magnetischen und mechanischen Steuerelementen, wobei jeweils der mechanische Teil als Speicher und Kraftverstärker dienen muss und immer eine oder mehrere Steuerkurven enthält. Ebenfalls gemeinsam haben die genannten Systeme, dass sie ausserhalb des Rotationszentrums der eigentlichen Kupplungsvorrichtung angeordnet sind, entsprechend grosse Elemente enthalten die relativ lange Funktionswege haben, was bei hohen Maschinendrehzahlen grosse Beschleunigungs- und Verzögerungskräfte hervorruft; dies wiederum fördert die Abnützung und die Lärmentwicklung, zusammen mit einem entsprechenden Energiebedarf. Ausserdem sind die durch diese Funktionsweise bedingten Konstruktionen in den äusseren Abmessungen recht voluminös, wodurch oft Anbauprobleme im Zusammenhang mit der Webmaschine entstehen. Zur einfachen Webfehlerbehebung sollte eine Schaftmaschine zudem aus jeder Position heraus rückwärts programmrichtig drehbar sein, was bei den erwähnten Systemen zum Teil nur mit erheblichem Aufwand, oder überhaupt nicht möglich ist.

Eine gemäss dem Oberbegriff des Anspruches 1 ausgebildete Steueranordnung ist aus EP-A-0 234 321 (veröffentlicht am 02.09.1987) bekannt. Es handelt sich dabei um eine Einrichtung mit kollektiven Betätigungsmitteln im Innern der Antriebswelle. Der eigentliche Antriebsmechanismus liegt hier ausserhalb der Antriebswelle. Die Betätigungsmittel haben keine eigentliche Steuerfunktionen, sondern schieben lediglich periodisch alle Schiebekeile aus dem Kupplungseingriff.

Diese Steueranordnung eignet sich somit nur zur Durchführung einfacher, nicht veränderbarer Funktionen. Ein Teil der Betätigungs- und Steuermittel befindet sich zudem an wenig geeigneter Stelle.

Aufgabe der Erfindung ist es, eine Steueranordnung für die Keilkupplungsvorrichtungen, insbesondere von Rotations-Schaftmaschinen zu schaffen, die die beschriebenen Nachteile vermeidet und damit hohe Arbeitsgeschwindigkeiten möglich macht, die funktionsmässig von der Drehrichtung unabhängig ist und eine gedrungene Bauweise ermöglicht.

Die gestellte Aufgabe wird durch die im Anspruch 1 kennzeichnenden Merkmale gelöst.

Die stationäre Steueranordnung ist im Innern der Antriebswelle, d.h. im Zentrum der Kupplungsvorrichtung angeordnet und besteht für jede Pleuelstange vorzugsweise aus einem Elektromagnet, dessen Anker mit einem federbelasteten Steuerelement kombiniert ist und dieses Steuerelement während der Stillstandsphase der Hohlwelle direkt die radial beweglichen Stössel beeinflussen und dadurch dem Mitnehmer den mustergemässen Steuerbefehl erteilt, indem dieser Mitnehmer in eine von seinen beiden möglichen radialen Endpositionen gesteuert wird. Der Elektromagnet wird in synchronisierter Folge von einer elektronisch arbeitenden Mustersteuervorrichtung unter Spannung gesetzt und erregt, oder nicht erregt. Diese elektronische Mustersteuereinrichtung ist nicht Gegenstand dieser Erfindung und wird nicht näher beschrieben.

Um die stationären Elemente der Steueranordnung dreht sich vorzugsweise eine Hohlwelle in intermittierender Drehung von jeweils 180 Grad, mit kurzer Stillstandszeit.

Bei einer bevorzugten Ausführungsform ist der Mitnehmer im Exzenterring radial geführt und steht unter einer Federkraft die radial zum Rotationszentrum hin gerichtet ist.

Im stromlosen Zustand der Steueranordnung drückt die Feder des Steuerelementes, die stärker ist als diejenige im Mitnehmer, den Stössel gegen den Mitnehmer und diesen aus dem Wirkbereich der Ausnahme in der Hohlwelle, gleichzeitig in die Ausnahme des Pleuels, der den Exzenterring umfasst. Dreht die Hohlwelle nach der Stillstandsphase weiter, bleibt der Exzenterring mit dem Mitnehmer und dem Pleuel in Ruhestellung. Dies bedeutet, dass das am Pleuel angekuppelte Element, z.B. der Schaft einer Webmaschine, in der Ruhestellung verbleibt, z.B. in der Tieffachposition. Dieser Zustand ändert, sobald mustergemäss der Elektromagnet erregt wird und den Anker und damit das Steuerelement anzieht; dadurch kann der Mitnehmer unter Federdruck in die Ausnahme der Hohlwelle einrasten, wodurch der Stössel auf dieser Seite Richtung Rotationszentrum verschoben wird, während der gegenüberliegende Stössel in die leere Ausnahme der Hohlwelle gestossen wird.

Dreht die Hohlwelle nach der Stillstandsphase weiter, wird durch den eingerasteten Mitnehmer der Exzenterring mitgedreht und der Pleuel schwenkt von einer Endposition in die andere, zusammen mit dem angekuppelten Schaft (Hochfachposition). Nach der 180°-Drehung der Hohlwelle wird der nächste Steuerbefehl eingeleitet. Muss mustergemäss der Schaft wieder in seine Tieffachposition für den nächsten Schusseintrag, bleibt der Elektromagnet stromlos und der Mitnehmer verbleibt in der Ausnahme der Hohlwelle, wodurch der Exzenterring mitgedreht wird und der Pleuel in seine Ausgangsposition zurückkehrt. Am Ende der Drehung von 180° der Hohlwelle drückt das Steuerelement, unter stärkerer Federkraft stehend als der Mitnehmer, diesen mittels des Stössels radial nach aussen in die Ausnahme des Pleuels. Der Schaft befindet sich wieder in der Tieffachposition.

Muss der Schaft mustergemäss in der Hochfachposition bleiben, wird der Elektromagnet erregt und zieht somit Anker und Steuerelement an. Das Steuerelement drückt den Stössel radial gegen den Mitnehmer und diesen aus dem Wirkbereich der Ausnahme in der Hohlwelle, und in die Ausnahme im Pleuel. Beim Weiterdrehen der Hohlwelle nach der Stillstandsphase bleibt der Exzenterring in dieser eingenommenen Stellung, zusammen mit dem Pleuel, und der Schaft bleibt in der Hochfachstellung. Mustergemäss wird der Mitnehmer wieder in die Ausnahme der Hohlwelle eingerastet, wenn der Elektromagnet während der Steuerphase stromlos bleibt.

Die Erfindung wird nachstehend anhand von in der Zeichnung dargestellten Ausführungsbeispielen noch etwas näher erläutert. In der Zeichnung zeigen:

Fig. 1     reinschematisch eine Steuervorrichtung mit Kupplungsvorrichtung einer Rotationsschaftmaschine in der Stillstandsphase der Hohlwelle, mit dem Elektromagnet stromlos und der Kupplungsvorrichtung in der Tieffachposition des Schaftes,

Fig. 2     die Steuervorrichtung von Fig. 1, wobei der Elektromagnet erregt und damit der Magnetanker angezogen ist und der Mitnehmer der Kupplungsvorrichtung in der Ausnahme der Hohlwelle eingerastet ist,

Fig. 3     die Hohlwelle mit eingerastetem Mitnehmer, nach einer Drehung von 90°, und stromlosen Elektromagnet,

Fig. 4     die Steuervorrichtung und Kupplungsvorrichtung nach 180° Drehung der Hohlwelle gegenüber Fig. 1, in der Hochfachstellung des Schaftes, Elektromagnet stromlos und Mitnehmer in der Ausnahme der Hohlwelle eingerastet,

Fig. 5     wie Fig. 4, jedoch Elektromagnet erregt mit angezogenem Magnetanker und Mitnehmer in der Ausnahme des Pleuels eingerastet,

Fig. 6     ein Phasen-Diagramm der Steuer- und Kupplungsvorrichtung,

Fig. 7     einen horizontalen Schnitt durch Steuer- und Kupplungsvorrichtung gemäss Fig. 2,

Fig. 8     die Betätigung der Steuerelemente durch stirnseitig am Träger (Achse) angeordnete Elemente, wie Elektromagnet, Hydraulik- und Pneumatikzylinder, mechanische Elemente,

Fig. 9     einen Schnitt von Fig. 8,

Fig. 10     einen Schnitt durch eine zweiteilige Achse, mit Elektromagnet,

Fig. 11     einen Schnitt von Fig. 10,

Fig. 12     einen Schnitt durch eine zweiteilige Achse,

Fig. 13     eine Teil-Aussenansicht von Fig. 12,

Fig. 14     eine Hohlwelle, mit nicht axial durchlaufenden Ausnahmen,

Fig. 15     einen Schnitt durch die Achse und ein fluidbetätigtes Steuerelement,

Fig. 16     einen Schnitt durch die Schaftmaschine mit den Schaftsteuerelementen.

Die Steuervorrichtung besteht aus einem in der stationären Achse 1, 1' befestigten Elektromagnet 2 dessen Anker 3 mit dem Steuerelement 4 kombiniert ist, welches durch die Feder 5 belastet radial gegen den Stössel 6 drückt. Eine sich intermittierend drehende Hohlwelle 7, jeweils nach einer halben Umdrehung von 180° kurzzeitig stillstehend, weist zwei sich gegenüberliegende Ausnahmen 8, 8' auf in die der Mitnehmer 9 einrasten kann, wobei sich in jeder Ausnahme ein Stössel 6, 6' befindet. Der Mitnehmer ist radial im Exzenterring 10 geführt, welcher seinerseits einem Pleuel 11 als Lager dient, während die zweite Lagerstelle 12 des Pleuels durch ein Hebesystem 13 mit dem Schaft 14 gekuppelt ist.

Der sehr einfache Funktionsablauf des hier beschriebenen Steuersystems:

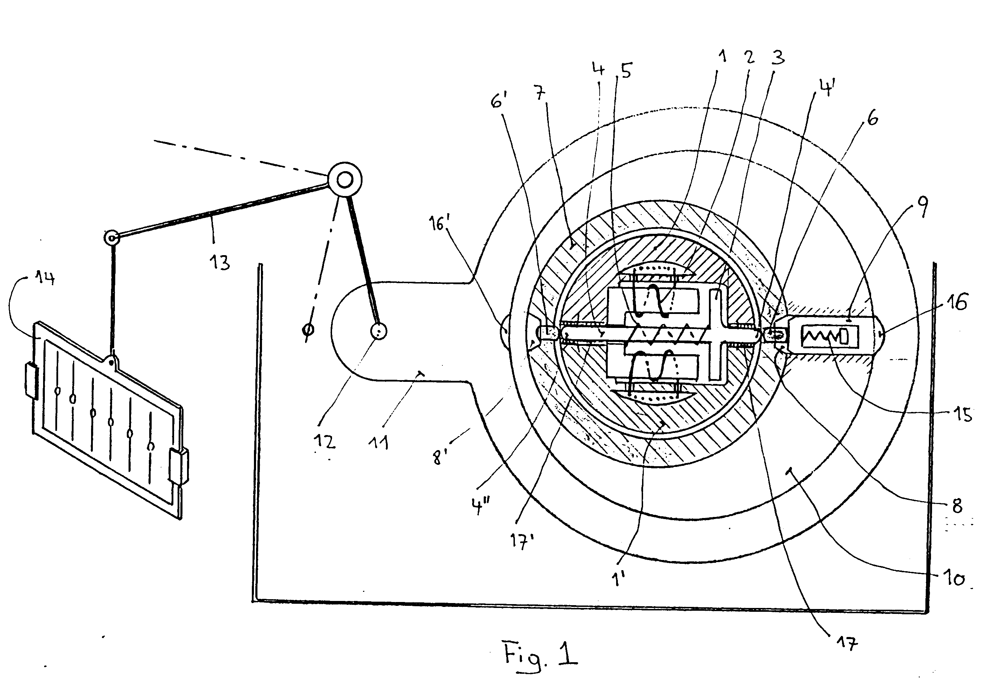

Fig.1 zeigt die Stillstandsphase der Hohlwelle 7, im Diagramm Fig. 6 durch die Linie I dargestellt, Zeitlinie "O". Der Elektromagnet 2 ist stromlos und das Steuerelement 4 mit dem Kopf 4' drückt mit der Federkraft $F_1$ von Feder 5 den Stössel 6 gegen den Mitnehmer 9, der unter der Federkraft $F_2$ von Feder 15 steht ($F_1 > F_2$), und diesen radial nach aussen in die Ausnahme 16 im Pleuel 11. Das Steuerelement 4 ist an seinen Enden beidseitig in Lagerstellen 17, 17' geführt um eine leichte axiale Verschiebung zu gewährleisten. Beide Enden des Steuerelementes sind als Stossköpfe 4' ausgebildet und stehen in Kontakt mit den Stösseln 6, 6' während der Steuerphase.

Die in Fig. 1 dargestellte Position des Pleuels entspricht einer Endlage vom angekuppelten Schaft 14, zum Beispiel Tieffachposition in Fig. 6, Linie II.

Beginnt die Hohlwelle 7 zu drehen, verbleibt der Exzenterring 10 unbeweglich, da er durch den Mitnehmer 9, welcher in die Ausnahme 16 des Pleuels 11 eingreift, festgehalten wird. Bevor der Stössel 6 ganz aus dem Bereich des Mitnehmers 9 kommt, verhindert der Aussendurchmesser der Hohlwelle 7 eine radiale Verschiebung des Mitnehmers 9 zum Zentrum hin, so dass während der Halbdrehung der Hohlwelle, in Fig. 6 im Bereich der Zeitlinie "O bis A", der Schaft 14 in der Tieffachposition verbleibt. Gegen Ende der 180°-Drehung kommt Ausnahme 8 mit Stössel 6 in den Bereich des ruhenden Mitnehmers 9. Der Stössel 6' gleitet auf den Kopf 4" und verhindert dadurch, dass der Mitnehmer, wenn er der Ausnahme 8' gegenübersteht, in diese einrasten kann. Erfolgt nach der Stillstandsphase eine weitere Drehung der Hohlwelle 7 ohne dass der Elektro-Magnet 2 erregt wird, wiederholt sich der beschriebene Ablauf.

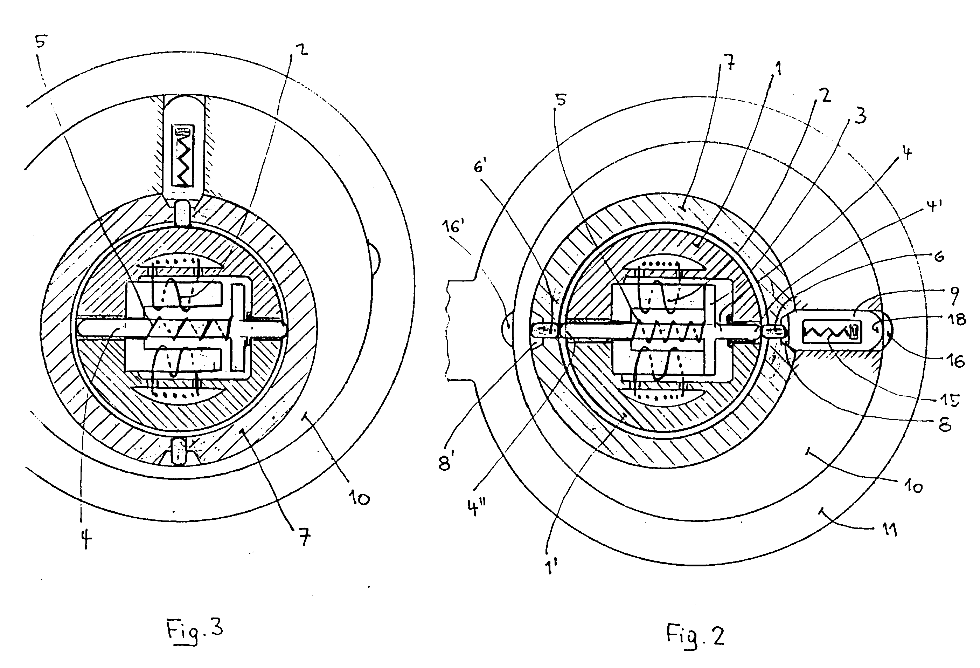

Die Fig. 2 zeigt, in Fig. 6 Zeitlinie "A", die Steuervorrichtung während der Stillstandsphase der Hohlwelle 7 und dem mustergemässen Steuerbefehl n mit erregtem Elektromagnet 2 und dadurch angezogenem Anker 3 mit Steuerelement 4. Die Feder 15 im Mitnehmer 9 drückt diesen in die Ausnahme 8 der Hohlwelle, da der Stössel 6 dem Kopf 4' folgen kann. Der Stössel 6' wird durch den Kopf 4" des Steuerelementes 4 in die freie Ausnahme 8' der Hohlwelle geschoben.

Der Mitnehmer ist durch das Einrasten in der Ausnahme 8 mit der Hohlwelle formschlüssig verbunden, während das gegenseitige Ende 18 des Mitnehmers aus dem Wirkbereich der Ausnahme 16 im Pleuel 11 gekommen ist.

Nach der Stillstandsphase "A" beginnt die Halbdrehung der Hohlwelle, die den Exzenterring 10 mittels dem eingerasteten Mitnehmer 9 mitdreht.

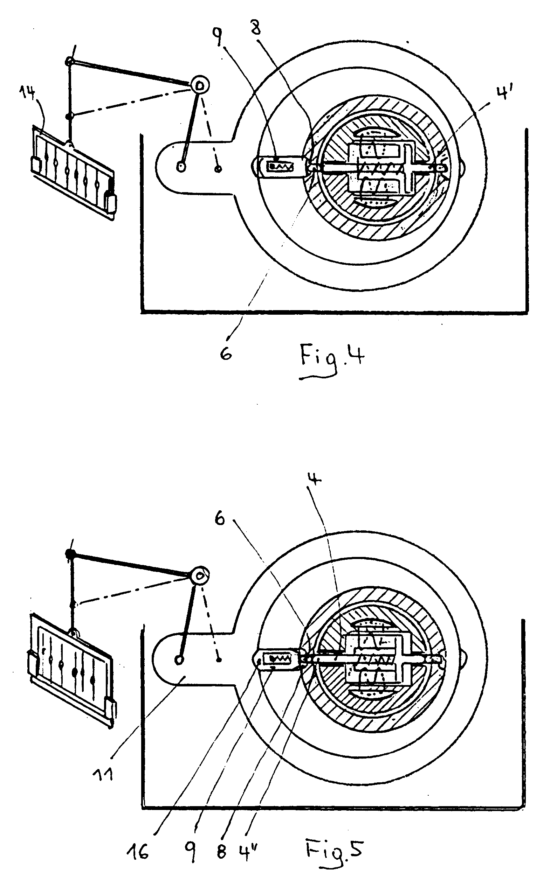

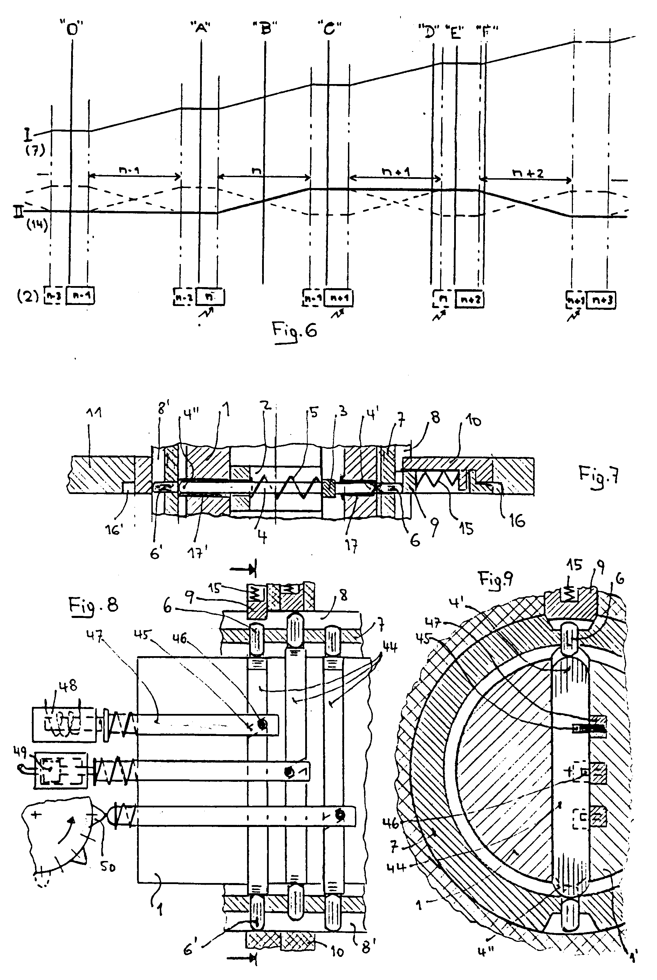

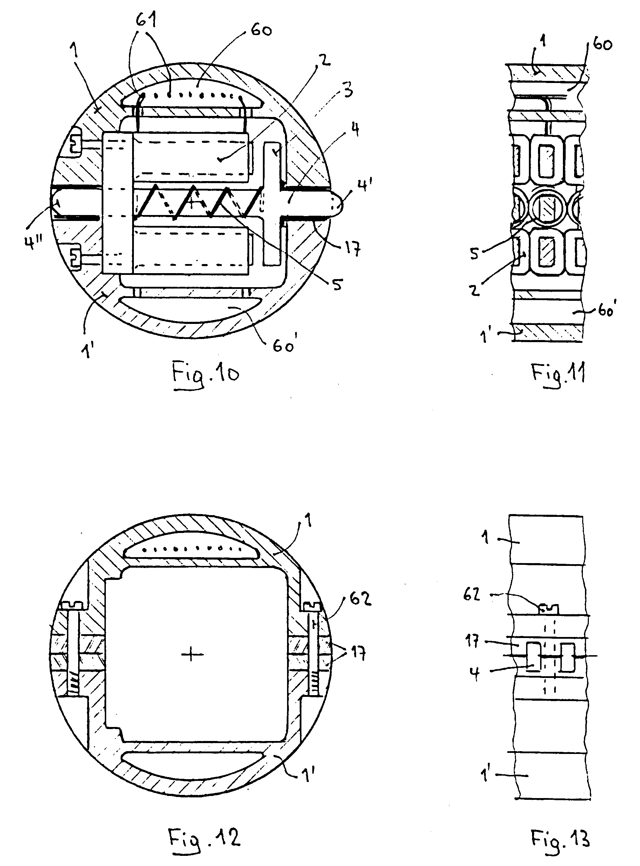

Fig. 3 zeigt die Stellung des Kupplungsystems nach 90°-Drehung der Hohlwelle, in Fig. 6 Zeitlinie "B".

Wie aus Fig. 6 ersichtlich ist, wird nach Beginn der Hohlwellen-Drehung der Elektromagnet 2 stromlos geschaltet und das Steuerelement 4 wird durch die Feder 5 radial in seine äussere Position geschoben.

Am Ende der Drehung von 180 Grad der Hohlwelle, in Fig. 6 Zeitlinie "C", befindet sich der Schaft 14 in der Hochfachposition. Während der Stillstandsphase der Hohlwelle wird mustergemäss der neue Steuerbefehl, in Fig. 6 n+l bezeichnet, dem Elektromagnet zugeführt.

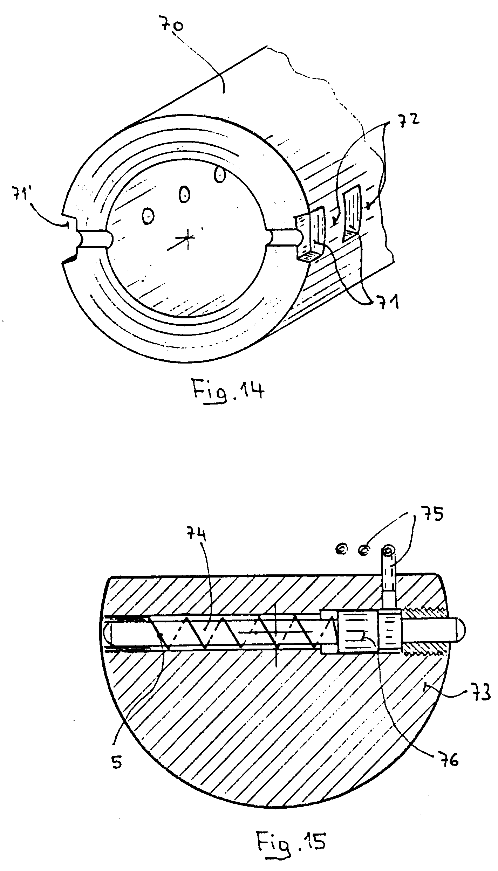

Wenn keine Erregung des Elektromagnet erfolgt, bleibt der Mitnehmer in der Ausnahme 8 der Hohlwelle eingerastet (Fig. 4) und durch die anschliessende Drehbewegung der Hohlwelle wird der Schaft in die Tieffachposition gebracht.

Kommt der Stössel 6 in die Nähe des Kopfes 4' des Steuerelementes, in Fig. 6 Zeitlinie "D", wird der Elektromagnet 2 mit dem Steuerbefehl n (Fig. 6) erregt, so dass der Stössel 6 bis zur Ruhestellung der Hohlwelle keinen Kontakt mit dem Kopf 4' hat. Jetzt wird der neue Steuerbefehl mustergemäss dem Elektromagnet 2 zugeführt, in Fig. 6 Zeitlinie "E".

Muss der Schaft 14 in der Tieffachposition (Fig. 1) bleiben, ist der Elektromagnet 2 stromlos und das Steuerelement 4 drückt unter der Wirkung der Feder 5 den Stössel 6 gegen den Mitnehmer 9 und dieser wird aus dem Wirkbereich der Ausnahme 8 der Hohlwelle gestossen und rastet in die Ausnahme 16 des Pleuels 11, wie in Fig. 1 dargestellt.

Muss der Schaft wieder in die Hochfachposition gebracht werden, bleibt der Elektromagnet 2 erregt während der ganzen Zeit von "D" bis "F" (Fig. 6), das heisst der Mitnehmer 9 bleibt in der Ausnahme 8 in der Hohlwelle eingerastet, macht also keine unnötige radiale Steuerbewegung.

Muss mustergemäss der Schaft aus der Position gemäss Fig. 4 während mehr als einem Schusseintrag der Webmaschine in der Hochfachposition bleiben, entsprechend Fig. 6 Zeitlinie "C", wird der Elektromagnet 2 mit dem Steuerbefehl n+1 erregt, sodass das Steuerelement 4 mit dem Kopf 4" den Stössel 6 radial gegen den Mitnehmer 9 drückt und diesen in die Ausnahme 16' des Pleuels 11 schiebt, wodurch der Mitnehmer 9 aus dem Wirkbereich der Ausnahme 8 der Hohlwelle kommt (Fig. 5). Die Hohlwelle kann nach der Stillstandsphase weiterdrehen, während der Exzenterring 10 mit dem Pleuel 11 formschlüssig gekuppelt ist und der Schaft in der Hochfachposition bleibt.

Aus dem Diagramm nach Fig. 6 ist ersichtlich, dass vor der Phase n (Schaftbewegung für Schusseintragung n) der Steuerbefehl n-2 an den Elektromagnet 2 gegeben wird, vor der Phase n+1 der Steuerbefehl n-1, usw. Mit dieser Steuerbefehlsfolge wird erreicht, dass nie ein Stössel 6, 6' kurz vor Erreichen der Stillstandsphase der Hohlwelle, an den Kopf 4', 4" des Steuerelementes 4 stösst.

Die hier beschriebene und nach dem Diagramm Fig. 6 arbeitende Steuervorrichtung besitzt den grossen Vorteil, dass das Kupplungssystem schussfolgerichtig arbeitet, d.h. die Schaftmaschine aus jeder Stellung heraus vor-und rückwärts gedreht werden kann und das mustergemässe Programm sofort in die richtige Schaftbewegung umgesetzt wird. Dies ist eine wichtige Voraussetzung für die einfache Bedienung der Webmaschine, besonders beim Schusssuchvorgang.

Bei einer Fehlinformation, wenn also die Phase n-2 fehlt, zum Beispiel von der elektronischen Steuerung aus, oder bei Programmwechsel, könnte der Stössel 6,6' kurz vor der Stillstandsphase der Hohlwelle 7 auf den Kopf 4', 4" des Steuerelementes 4 stossen. Durch die entsprechende Formgebung der Stössel 6, 6' und des Kopfes 4', 4" wird das Steuerelement 4 gegen die Feder 5 gestossen und wenn der Mitnehmer 9 die Ausnahme 16, 16' im Pleuel 11 erreicht hat, durch die Feder 5 in diese Halteposition (Tieffachstellung des Schaftes) gestossen.

Die Figur 7 zeigt einen horizontalen Schnitt der in Figur 2 dargestellten Steuer- und Kupplungsvorrichtung.

In der Figur 8 und 9 ist eine Möglichkeit gezeigt, wie die Steuerelemente 44 axial von ausserhalb der Achse 1, 1' betätigt werden können. Die Steuerelemente 44 sind in der Achsenhälfte 1 radial geführt und haben beispielsweise eine zu ihrer Bewegungsrichtung schräg verlaufende Nute 45, in die eine in der Achse 1 axial geführte Verbindungsstange 47 mit Nocken 46 eingreift und bei der axialen Bewegung der Verbindungsstangen 47 durch Elektromagnete 48, Hydraulik- oder Pneumatikzylinder 49 oder mechanisch, z.B. durch Nocken 50, die Steuerelemente 44 radial mustergemäss verschieben.

Eine Anordnung und Befestigungsmöglichkeit der Elektromagnete ist in Figur 10 und 11 dargestellt. In den beiden Achshälften 1, 1' sind axial durchgehende Hohlräume 60, 60' vorhanden in die die Zuführleitungen 61 für die Elektromagnete 2 verlegt sind. Ferner kann ein Kühlmittel, zum Beispiel Luft, die Hohlräume 60, 60' durchströmen.

Für die Montage und Wartung der Steuervorrichtung ist es von Vorteil, wenn die Achse axial in zwei Hälften 1, 1' ausgeführt wird. Figur 12 und 13 veranschaulichen eine Möglichkeit die Hälften 1, 1' mittels Schrauben 62 zusammenzuhalten.

Vorteilhaft ist eine Ausführung der Hohlwelle 70 entsprechend Figur 14. Die Ausnahmen für die Mitnehmer sind als Taschen 71 in der Hohlwelle 70 ausgebildet, wodurch für die Lagerstellen zwischen Hohlwelle 70 und Exzenterring 10 jeweils eine ununterbrochene Lauffläche 72 zur Verfügung steht.

Die Figur 15 veranschaulicht den Einbau von fluidbetätigten Steuerelementen. In der Achse 73 ist das als Kolben 76 ausgebildete Steuerelement 74 untergebracht.

Bei einseitig wirkendem Kolben 76 drückt die Feder 5 das Steuerelement 74 in eine radiale Endposition. Die Zuleitungen 75 können im freien Raum zwischen Achse 73 und Hohlwelle angeordnet werden.

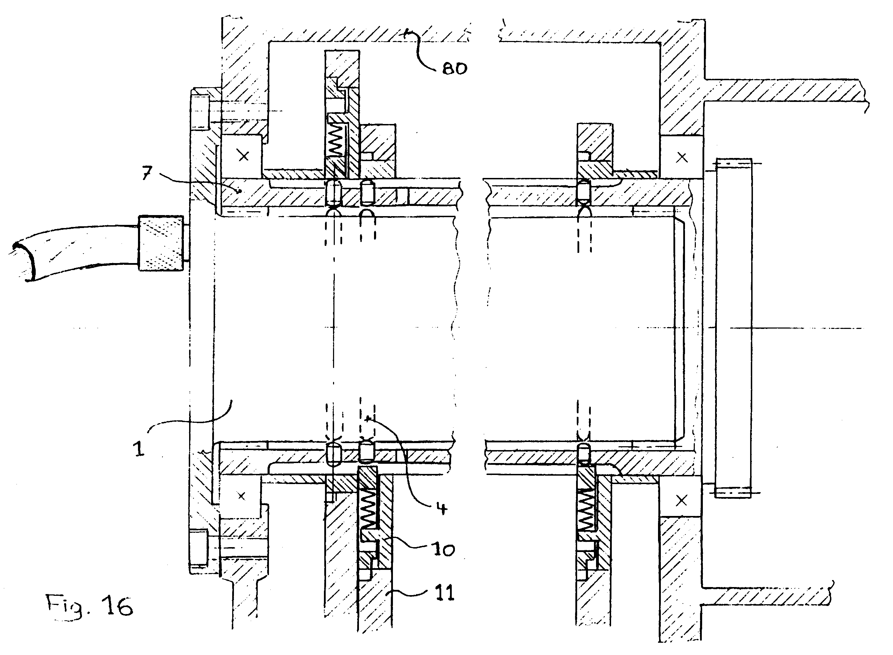

Figur 16 zeigt eine Ausführungsform der Achse. Die hervorragende Montage- und Servicefreundlichkeit der erfindungsgemässen Ausführung besteht darin, dass die Achse (1) auf einfachste Weise in der Hohlwelle (7) gelagert ist und als komplette Baugruppe ein- respektive ausgebaut werden kann.

## Patentansprüche

1. Steueranordnung einer Keilkupplungsvorrichtung, insbesondere für eine Rotations-Schaftmaschine, mit einer Antriebswelle (7), mindestens einem darauf gleitbar bzw. drehbar gelagerten Exzenterring (10) mit um diesen angeordneter Pleuelstange (11), an welche jeweils ein in gesteuerter Weise zu bewegendes Element (14), insbesondere ein Schaft einer Webmaschine ankuppelbar ist, wobei im Exzenterring (10) ein Mitnehmer (9) radial verschiebbar gelagert ist, welcher in gesteuerter Weise, über Betätigungs- und Steuermittel, entweder in eine von zwei Ausnehmungen (16, 16') der Pleuelstange (11) oder in eine von zwei Ausnehmungen (8, 8') der Antriebswelle (7) einrastbar ist, wobei Teile der Betätigungsmittel (4,5,6) für den Mitnehmer (9) im Innern der Antriebswelle (7) angeordnet sind, dadurch gekennzeichnet, dass sich im Innenraum der als Hohlwelle (7) ausgebildet en Antriebswelle ein feststehender Träger, in Form einer starren Achse (1) befindet, welcher Träger für das zu steuernde Element, d.h. für die Pleuelstange (11) einen Querdurchgang mit zwei sich einander diametral gegenüberliegenden Lagerstellen (17, 17') für ein Steuerelement (4,44, 76) aufweist, welch letzteres geringfügig länger als der Durchmesser des Trägers (1) ausgebildet ist und in Durchmesserrichtung des Trägers (1) steuerbar radial hin- und herverschiebbar ist, und dass die Hohlwelle (7) in der Radialebene des Steuer-Elementes (4, 44, 76) zwei einander diametral gegenüberliegende, im Bereich von den Aussenausnehmungen (8, 8') der Hohlwelle (7) liegende radiale Durchgänge aufweist, in denen je ein Stössel (6, 6') radial gleitbar gelagert ist, wobei jeder Stössel (6, 6') länger ist als die Wanddicke der Hohlwelle (7) an den Aussenausnehmungen (8, 8') und zwecks Ein- und Ausrastens des Mitnehmers (9) jeweils gegen diesen anliegt, und dass am Steuerelement (4,44,76) dessen Bewegung auslösende Steuermittel (2,5,45-50,75,76) zur Einwirkung gelangen.

2. Steueranordnung nach Anspruch 1, dadurch gekennzeichnet, dass das unter Federkraft stehende Steuerelement (4) durch ein Elektromagnet (2) betätigbar ist, dessen Anker (3) mit dem Steuerelement (4) verbunden ist und dass das Steuerelement (4) bei stromlosem Zustand des Elektromagneten (2) den einen Stössel (6, 6') in seinem Bewegungsbereich frei gibt und der Mitnehmer (9), durch die Federkraft der Feder (15) im Mitnehmer (9), in die Ausnahme (8, 8') der Hohlwelle (7) einrastet und den gegenüberliegenden Stössel (6, 6') radial nach aussen schiebt und, falls sich der Mitnehmer (9) auf dieser Seite befindet, den Mitnehmer (9) aus der Ausnahme (8, 8') in der Hohlwelle (7) entgegen der schwächeren Federkraft, diesen in die Ausnahme (16, 16') im Pleuel (11) drückt und dadurch ein Weiterdrehen des Exzenterringes (10) verunmöglicht.

3. Steueranordnung nach Anspruch 1, dadurch gekennzeichnet, dass das Steuerelement (44) in der Achse (1,1') radial geführt und beweglich ist und durch mechanisch übertragbare Steuerbefehle axial von ausserhalb der Vorrichtung, die Stössel (6, 6') und damit den Mitnehmer (9) betätigen.

4. Steueranordnung nach einem der Ansprüche 1 - 3, dadurch gekennzeichnet, dass der Träger (1, 1') im Querschnitt gesehen, ein- oder mehrteilig ausgebildet ist.

5. Steueranordnung nach Anspruch 1, dadurch gekennzeichnet, dass die Achse (1, 1') axial verlaufende Hohlräume (60, 60') besitzt, in welchem ein Kühlmedium durchströmen kann und darin Steuerorgane verlegt werden können.

6. Steueranordnung nach Anspruch 1, dadurch gekennzeichnet, dass das Steuerorgan ein pneumatisch oder hydraulisch arbeitender, einfachwirkender, unter Federkraft (5) stehender, oder doppelwirkender Zylinder mit Kolben (76) ist, und der Kolben (76) als Steuerelement (74) ausgebildet ist.

7. Steueranordnung nach einem der Ansprüche 1 - 6, dadurch gekennzeichnet, dass in der Hohlwelle (70) die Ausnahmen (71, 71') für den Mitnehmer (9) nicht axial durchgehend sind, sondern nur die Breite des Mitnehmers hat, damit für das Gleit- oder Wälzlager eine umfangmässig ununterbrochene Lauffläche (72) vorhanden ist.

8. Steueranordnung nach Anspruch 1, dadurch gekennzeichnet, dass der Träger in Form einer starren Achse (1) so ausgebildet ist, dass diese mitsamt den darin eingebauten Steuerelementen (4,44,74) aus der Hohlwelle (7) und damit aus dem Maschinengehäuse (80) ausbaubar ist, ohne dass Hohlwelle (7), Exzenterringe (10) oder Pleuelstangen (11) demontiert werden müssen.

## Claims

1. A control system of a kee coupling apparatus, specifically of a rotary dobby loom, including a drive shaft (7), at least one eccentric hoop (10) supported slidably resp. rotationally thereupon including a connecting rod (11) arranged circumferentially therearound, to which a member (14) which is to be moved in a controlled manner, specifically a heald of a weaving machine is intended to be coupled, whereby a dog (9) is supported in a radially displaceable manner in said eccentric hoop (10) and is movable in a controlled manner via operating and control means into engagement either into one of two recesses (16,16') of said connecting rod (11) or into one of two recesses (8,8') of said drive shaft (7), whereby parts of said operating means (4,5,6) for said dog (9) are located at the inside of said drive shaft (7), characterized in that said drive shaft is a hollow shaft (7) and in the inner space of which there is provided a stationary support in form of a rigid axle (1), which support includes a lateral passage for the element to be controlled, i .e. for the connecting rod (11), having two diametrically oppositely located bearing areas (17,17') for a control element (4,44,76), which latter is designed a few longer than the diameter of the support (1) and is in direction of the diameter of the support (1) controllably movable back and forth in a radial direction, and in that said hollow shaft (7) includes in the radial plane of the control element (4,44,76) two radial passages located diametrically opposite of each other and in the area of the outer recesses (8,8') of the hollow shaft (7), provided each for radially slidably support a push rod (6,6'), each push rod (6,6') having a length exceeding the wall thickness of said hollow shaft (7) at the position of said outer recesses (8,8') and in order to allow an engagement and disengagement of the dog (9) abuts same, and in that control means (2,5,45-50,75,76) are provided which act onto the control element (4,44,76) to release its movement.

2. The control system of claim 1, characterized in that said control element (4) which is subjected to a spring force is actuatable by an electromagnet (2) having an armature (3) which is coupled to the control element (4), and in that said control element (4) at the deenergized condition of said elecro-magnet (2) releases one of the push rods (6,6') for its range of movement and the dog (9), due to the spring force of the spring (15) in the dog (9) engages into the recess (8,8') of the hollow shaft (7) and pushes the oppositely located push rod (6,6') radially outwards, and, if the dog (9) is located at this side, urges the dog (9) out of the recess (8,8') in said hollow shaft (7) against the weaker spring force and into the recess (16,16') in said connecting rod (11), whereby a further rotating of said eccentric hoop (10) is prevented.

3. The control system of claim 1, characterized in that said control element (44) is guided radially in said axle (1,1') and is movable and is operative to actuate the push rods (6,6') and accordingly the dog (9) by mechanically transmittable commands axially from the outside of the system.

4. The control system of any of claims 1 to 3, characterized in that said support (1,1'), seen in cross-section, is of a single or multipart design.

5. The control system of claim 1, characterized in that said axle (1,1') comprises axially extending hollow spaces (60,60') allowing the throughflow of a cooling agent and the arranging of control members therein.

6. The control system of claim 1, characterized in that said control member is a pneumatic or hydraulic operating, single-acting cylinder with a piston subjected to a spring force (5) or a double acting cylinder with a piston (76), and in which said piston (76) is designed as said control element (74).

7. The control system of any of claims 1 to 6, characterized in that the recesses (71,71') for the dog (9) in the hollow shaft (70) are not axially through-passing but have the width of the dog only, such to provide a circumferentially uninterrupted running surface (72) for the sleeve bearing or the roller bearing.

8. The control system of claim 1, characterized in that said support in form of a rigid axle (1) is designed such that the latter together with the control elements (4,44,74) assembled therein can be removed out of said hollow shaft (7) and accordingly the machine casing (80) without having to disassemble the hollow shaft (7), the eccentric hoops (10) or the connecting rods (11).

**Revendications**

1. Dispositif de commande d'un appareil d'accouplement à clavettes, particulièrement pour un Dobby rotatif, avec un arbre d'entraînement (7), au moins un anneau excentrique (10) monté sur ce dernier de manière coulissante resp. rotative et supportant sur sa circonférence une bielle (11) avec laquelle est à accoupler un élément (14) à déplacer d'une manière commandée, en particulier la lame d'un métier automatique, un élément d'entraînement (9) radialement déplaçable étant monté dans l'anneau excentrique (10) et destiné à se verrouiller de manière commandée par des moyens d'actionnement et de commande soit dans l'une de deux cavités (16,16') de la bielle (11) soit dans l'une de deux cavités (8,8') de l'arbre d'entraînement (7), des parties des moyens d'actionnement (4,5,6) pour l'élément d'entraînement (9) étant logées à l'intérieur de l'arbre d'entraînement, caractérisé en ce que l'intérieur de l'arbre d'entraînement en forme d'un arbre creux (7) loge un support fixe sous forme d'un arbre rigide (1), ce support présentant pour l'élément à commander, c'est-à-dire pour la bielle (11) un passage transversal avec deux sections d'appui (17,17') diamétralement opposés pour un élément de commande (4,44,76) ayant une longueur légèrement plus grande que le diamètre du support (1) et pouvant être déplacé sur commande dans les deux sens dans la direction du diamètre du support (1), et en ce que l'arbre creux (7) présente dans le plan radial de l'élément de commande (4,44,76) deux passages diamétralement opposé, situés dans le voisinage des cavités (8,8') de l'arbre creux (7) et s'étendant radialement, dont chacun loge un poussoir (6,6') pouvant coulisser radialement, chaque poussoir (6,6') ayant une longueur plus grande que l'épaisseur de la paroi de l'arbre creux (7) à l'emplacement des cavités (8,8') et s'appuie contre l'élément d'entraînement (9) en vue du verrouillage ou déverrouillage de ce dernier, et en ce que des moyens de commande (2,5,45-50, 75,76) agissent sur l'élément de commande (4,44,76) pour initier son mouvement.

2. Dispositif de commande selon la revendication 1, caractérisé en ce que l'élément de commande (4) qui se trouve sous l'action d'une force ressort peut être actionné au moyen d'un éléctro-aimant (2) dont l'armature (3) est reliée à l'élément de commande (4) et en ce que l'élément de commande (4) à l'état non-excité de l'éléctro-aimant (2) libère le poussoir (6,6') pour son champs d'action et en ce que l'élément d'entraînement (9), par l'intermédiaire de la force du ressort (15) dans l'élément d'entraînement, se verrouille dans la cavité (8,8') de l'arbre creux (7) et repousse le poussoir opposé (6,6') radialement vers l'extérieur et, lorsque l'élément d'entraînement (9) se trouve de ce côté, l'élément d'entraînement (9) en dehors de la cavité (8,8') de l'arbre creux (7) contre la force ressort plus faible et dans la cavité (16,16') de la bielle (11) pour ainsi bloquer toute rotation de l'anneau excentrique (10).

3. Dispositif de commande selon la revendication 1, caractérisé en ce que l'élément de commande (44) est guidé radialement dans l'arbre (1,1') et est mobile pour actionner les poussoirs (6,6') et ainsi l'élément d'entraînement (9) au moyens d'ordres de commande transmissible mécaniquement et axialement de l'extérieur du dispositif.

4. Dispositif de commande selon l'une des revendications 1 à 3, caractérisé en ce que le support (1,1') est formé, vu en section, par une ou plusieurs parties.

5. Dispositif de commande selon la revendication 1, caractérisé en ce que l'arbre (1,1') présente des cavités (60,60') s'étendant axialement et dans lesquelles peut circuler un réfrigérant et peuvent être placés des organes de commande.

6. Dispositif de commande selon la revendication 1, caractérisé en ce que l'organe de commande est un cylindre pneumatique ou hydraulique à action simple ou double, soumis à l'action d'une force ressort (5), avec un piston (76), ce piston (76) formant l'élément de commande (74).

7. Dispositif de commande selon l'une des revendications 1 à 6, caractérisé en ce que les cavités (71,71') pour l'élément d'entraînement (9) dans l'arbre creux (70) ne sont pas axialement traversant mais ne présentent que la largeur de l'élément d'entraînement pour présenter une surface portante (72) circonférentiellement ininterrompue pour le palier lisse ou à roulement.

8. Dispositif de commande selon la revendication 1, caractérisé en ce que le support sous forme d'arbre rigide (1) est construit tel qu'il peut être démonté, y compris les éléments de commande (4,44,74) qui y sont incorporés, de l'arbre creux (7) et ainsi du bâti de la machine (80), sans besoin de démonter l'arbre creux (7), les anneaux excentriques (10) ou les bielles (11).

Fig. 1

Fig. 2

Fig. 3

Fig.4

Fig.5

EP 0 274 119 B1

Fig. 6

Fig. 7

Fig. 8

Fig. 9

12

Fig.10

Fig.11

Fig.12

Fig.13

EP 0 274 119 B1

Fig.14

Fig.15

14

Fig. 16